Europäisches Patentamt

European Patent Office

Office européen des brevets

(11) Publication number: **0 155 085 B1**

## EUROPEAN PATENT SPECIFICATION

(45) Date of publication of patent specification: **17.01.90**

(51) Int. Cl.⁵: **G 06 K 17/00, G 06 K 13/26**

(21) Application number: **85300960.3**

(22) Date of filing: **13.02.85**

(54) **Apparatus for driving tapes.**

(30) Priority: **16.02.84 JP 27842/84**
**16.02.84 JP 27844/84**

(43) Date of publication of application:
**18.09.85 Bulletin 85/38**

(45) Publication of the grant of the patent:
**17.01.90 Bulletin 90/03**

(84) Designated Contracting States:
**AT DE GB NL SE**

(56) References cited:
**EP-A-0 100 970**
**US-A-4 160 169**

(73) Proprietor: **Futagawa, Toshinobu**
**Famile Nishishinjuku 1007 3-3-23, Nishishinjuku**
**Shinjuku-ku Tokyo (JP)**

(72) Inventor: **Futagawa, Toshinobu**
**Famile Nishishinjuku 1007 3-3-23, Nishishinjuku**
**Shinjuku-ku Tokyo (JP)**

(74) Representative: **Spall, Christopher John et al**
**BARKER, BRETTELL & DUNCAN 138 Hagley**
**Road**
**Edgbaston Birmingham B16 9PW (GB)**

Courier Press, Leamington Spa, England.

## Description

The present invention relates to an apparatus for positioning desired portions of tapes simultaneously in a predetermined position, and more particularly it relates to an improvement of tape holding means of the tape driving apparatus.·

The present invention is particularly applicable to multi-purpose codeless input equipments for computer addressers, telephone itself and telephone exchangers, microfilm readers, magnetic recording systems or the like.

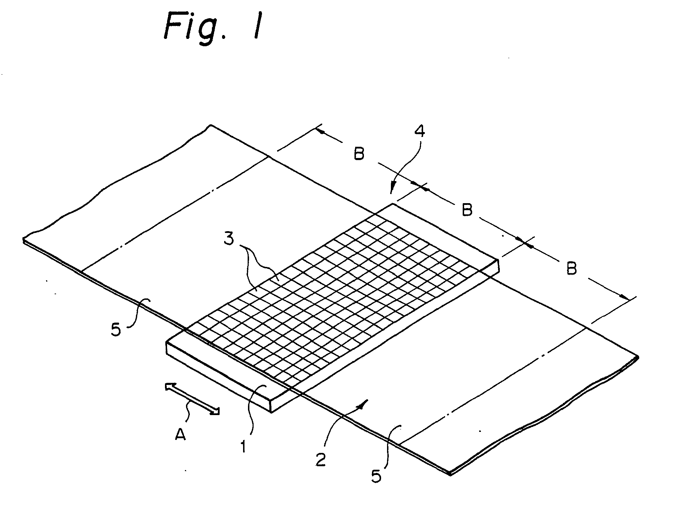

A conventional codeless input machine 4 (Fig. 1) comprises an input unit 1 and a film 2 on which a number of items 3 are recorded in matrix pattern. Each item recorded on the film corresponds to a respective information to be inputted. All of the items recorded on the film are grouped into a plurality of pages 5 having a lengthwise dimention $B$ equal to that of the input unit, a transverse dimention of each page corresponding to the width of the film. In order to position a desired item 3 on the input unit 1 for inputting the information corresponding to the desired item, the film 2 can be moved by means of an appropriate film feeding device (not shown) incorporated into the input machine in both directions indicated by an arrow $A$ such that the page 5 including the desired item 3 is aligned with the input unit 1. When the desired item 3 is energized by a pen-touch or key-push operation, a corresponding input signal is generated; said input signal selecting or designating a corresponding address among a plurality of addresses stored in a memory (not shown) through the medium of a control portion (not shown) in the input unit 1, thereby generating an output signal regarding the information corresponding to the desired item. When a new item to be inputted next is not included in the present page, the film must be moved to position a new page including said new item on the input unit 1.

In this conventional input machine, since the movement of the film is effected per "page", when the lengthwise dimension of the page $B$ and the moving speed of the film is $V$, it takes at least a time of B/V for changing a page from one to the next one. Particularly, if the first page is changed to the last page, when the total number of pages is $N$, it takes a long time of B/V (N — 1). Accordingly, this conventional input machine has a disadvantage of time consumption for changing pages with the result that efficiency of inputting operation is reduced.

By increasing the moving speed of the film, the above drawback of the conventional input machine can be more or less eliminated. However, in this case, there exists another drawback that it is difficult to accurately stop a desired page of the film in a predetermined position on the input unit.

To eliminate the above drawbacks of the conventional codeless input machine, the applicant has proposed a new type of tape driving apparatuses, as described in the Japanese Patent Application No.124877/82 and Japanese Patent Application No. 136538/82 (corresponds to the non-prepublished EP—A—0100970 falling under Art. 54(3)). The apparatus described in the Japanese Patent Application No. 124877/82 (referred to as "flat-type tape driving apparatus" hereinafter) comprises a plurality of first rollers arranged side by side in a single plane, a plurality of tapes each of which is wound from its one end on the corresponding first roller and which are wound together from the other ends thereof on a single second roller, and a plurality of guide plates each of which is arranged above the corresponding first roller and on which the tapes pass, the tapes being shifted simultaneously by the same amount by selectively driving the first rollers or the second roller. In the apparatus described in the Japanese Patent Application 136538/82 (referred to as "annular-type tape driving apparatus" hereinafter), the first rollers are arranged around the second roller and are disposed equidistantly from the second roller and from each other, the tapes being wound from their one ends on the corresponding first rollers and being also wound together from the other ends thereof on the second roller, the guide plates being arranged over the radially outermost portions of the first rollers.

Although these apparatuses bring about satisfactory results, due to the existence of the guide plates, the constructions of the apparatus is relatively complex.

According to our invention in tape drawing apparatus according to the introductory portion of Claim 1 the first roller has a polygonal cross section for determining an area of tape to be written on or read from.

By choosing a roller of polygonal cross section the tape driving apparatus can operate effectively without guide plates with the result that the tapes can be more effectively utilized.

The tape driving apparatus has a simple construction and can be arranged such that desired portions of a plurality of tapes can be positioned simultaneously in a predetermined position.

In addition the present invention as claimed can effectively utilize the tapes of the tape driving apparatus.

Figure 1 is a partial· perspective view of a conventional codeless input machine;

Figure 2A is a side view showing a principle of the above flat-type tape driving apparatus;

Figure 2B is a side view showing a principle of the above annular-type tape driving apparatus;

Figure 3 is a schematic side view showing a principle of a tape driving apparatus according to an embodiment of the present invention;

Figure 3A is a first version of the tape driving apparatus of Figure 3;

Figure 3B is a second version of the tape driving apparatus of Figure 3;

Figure 4 is a schematic side view showing a principle of a tape driving apparatus according to a second embodiment of the present invention;

Figure 5 is a schematic side view showing a principle of a tape driving apparatus according to a third embodiment of the present invention;

Figure 6 is a schematic partial side view showing a principle of a tape driving apparatus according to a fourth embodiment of the present invention;

Figure 7 to Figure 15 show effective utilization of the tapes in the tape driving apparatus, wherein Fig. 7 is a schematic side view of the annular-type tape driving apparatus according to a preferred embodiment of the present invention;

Figure 8 is a side view showing a pair of rollers holding the tape according to the principle of the invention;

Figure 9 is a version of the paired rollers of Figure 8;

Figure 10 is a side view of a cassette containing the paired rollers of Figure 9;

Figure 11 is a modification of the paired rollers of Figure 9;

Figure 12 is a version of the paired rollers of Figure 11;

Figure 13 shows a preferred application of the paired rollers of Figure 12;

Figure 14 is a partial perspective view showing an embodiment of means for driving the rollers of Figure 13; and

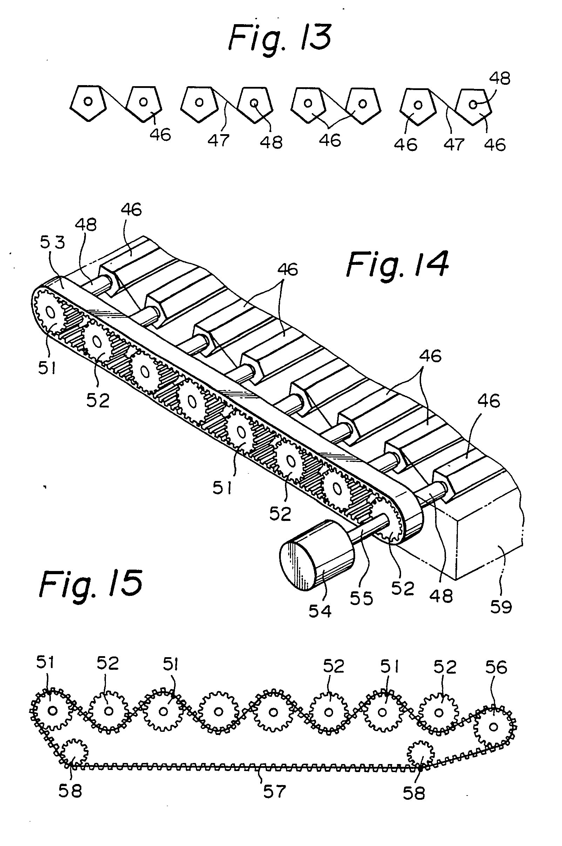

Figure 14 is a side view showing another embodiment of the means for driving the rollers of Figure 13.

The present invention will now be described in detail with reference to the drawings showing embodiment of the tape driving apparatus according to the invention.

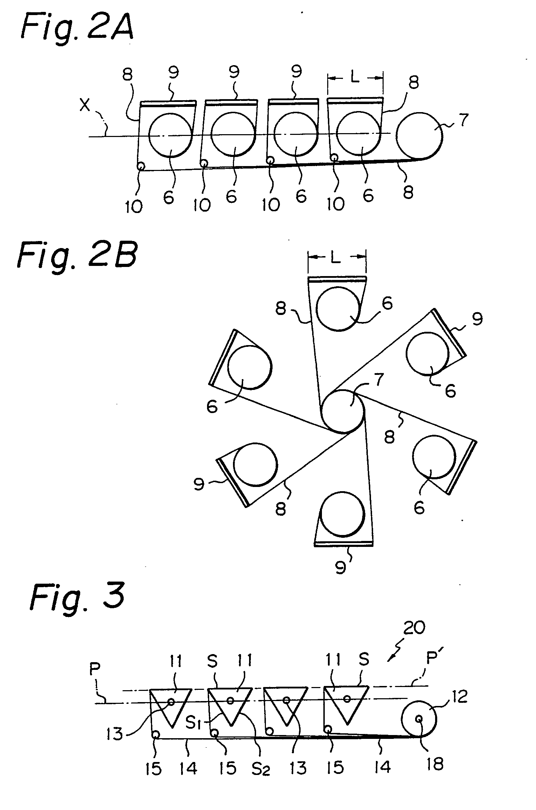

As shown in Fig. 2A, the flat-type tape driving apparatus described in the above-mentioned Japanese Patent Application No. 124877/82 comprises a plurality of first rollers 6 arranged side by side and parallel to each other in a single plane $X$, a plurality of guide plates 9 each arranged above the corresponding first roller 6, and a plurality of tapes 8 each of which is wound from its one end on the corresponding first roller 6 and passes on the corresponding guide plate 9 and which are wound together from the other ends thereof on a second roller 7 arranged parallel to the first rollers. Guide rollers 10 are provided for guiding the corresponding tapes 8. Similarly, as shown in Fig. 2B, in the annular-type tape driving apparatus described in the above-mentioned Japanese Patent Application No. 136538/82, the first rollers 6 are arranged around the second roller 7 and are disposed equidistantly from the second roller 7 and from each other. Each guide plate 9 is arranged over the radially outermost side of the corresponding first rollers 6. Each tape 8 which is wound from its one end on the corresponding first roller 6 passes on the corresponding guide plate 9 and extends to the second roller. The tapes 8 are wound together from the other ends thereof on the second roller 7. In these tape driving apparatuses, since "page" can be changed (that is to say, the items recorded on the tape portions positioned on the guide plates can be simultaneously changed) only by shifting the all of the tapes 8 simultaneously by a distance equal to a width $L$ (Figs. 2A and 2B) of the guide plate, a desired item recorded on the tape can be quickly selected, in comparison with the conventional codeless input machine as shown in Fig. 1. However, in these apparatuses, since the guide plates 9 are provided for facilitating the handling operation of the items on the tapes, the whole construction of the apparatus is relatively complex and the apparatus itself is expensive.

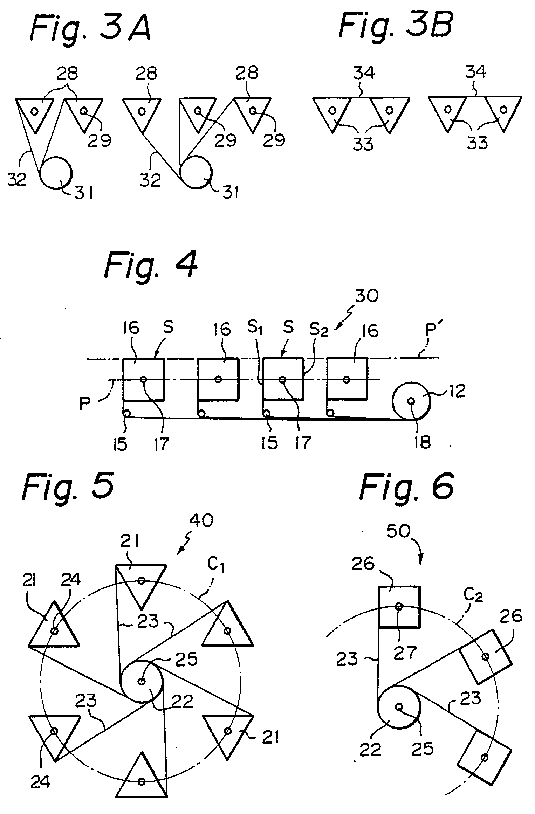

According to the present invention, the tape driving apparatus has no guide plates. More particularly, as shown in Figs. 3 and 4, in the tape driving apparatus of the present invention, embodied as the flat-type tape driving apparatus, each first roller 11 has a polygonal cross section. Particularly, the tape driving apparatus 20 shown in Fig. 3 comprises a plurality of first rollers 11 having the same dimension and each having an equilateral triangular cross section. Tapes 14 each wound from its one end on the corresponding first roller 11 pass around corresponding guide rollers 15 and are wound together from the other ends thereof on a second roller 12 which may be of triangular cross section or of circular cross section as shown in Fig. 3. Central shafts 13 of the first rollers 11 lie in a single plane $P$. In a rest position (Fig. 3), one of three side surfaces $S$ of each first roller 11 is positioned parallel to the plane $P$, and, therefore, the items recorded on the tape portions positioned on the side surfaces $S$ of the first rollers 11 are displayed on a single plane $P'$ parallel to the plane $P$. All of the tapes 14 are shifted simultaneously by the same amount. More particularly, when the first rollers are simultaneously rotated by 120° in a clockwise direction (Fig. 3), next side surfaces $S1$ of the rollers are positioned in the plane $P'$, thereby displaying new items recorded on the tapes (i.e., changing one page). On the other hand, when the second roller 12 is rotated in an anticlockwise direction by an angle corresponding to 120° rotation of the first roller, the tapes 14 are unwound from the first rollers, thereby positioning the other side surfaces $S2$ of the first rollers in the plane $P'$. Positive rotation of the first rollers or the second roller can be effected by means of appropriate driving means such as bevel gears (not shown) fixed to the shafts 13 of the first rollers and a shaft 18 of the second roller and corresponding bevel gears (not shown) which are meshed with the first mentioned bevel gears and which are fixed to a shaft of a stepping motor, as described in the above Japanese Patent Application No. 124877/82. In the tape driving apparatus shown in Fig. 3, since the items recorded on the tape portions positioned on the surfaces $S$ in the plane $P'$ can be easily handled by an operator, the tape driving apparatus needs no guide plates.

The tape driving apparatus 30 according to another embodiment of the invention shown in Fig. 4 is similar to that shown in Fig. 3, except that each of the first rollers 16 of Fig. 4 has a square cross section. Also, in this embodiment, central shafts 17 of the first rollers 16 lie in a single plane

*P* so that, in a rest position, one of four side surfaces (i.e., top surface) *S* of each first roller is positioned in a plane *P'* parallel to the plane *P*. Further, in this embodiment, when all of the first rollers 16 are positively rotated simultaneously in a clockwise direction (Fig. 4) by 90°, side surfaces *S1* are positioned in the plane *P'* to display new items recorded on the tapes. Similarly, when the second roller 12 is positively rotated in an anticlockwise direction by an angle corresponding to 90° rotation of the first roller, the opposite side surfaces *S2* are positioned in the plane *P'* to unwind the tapes from the corresponding first rollers. Roller driving means (not shown) similar to that of the embodiment of Fig. 3 can be used.

It should be noted that the cross section of the first roller is not limited to the triangle or square and can be a "polygon" such as a regular pentagon, a regular hexagon or the like.

Fig. 3A shows a first version of the apparatus of Fig. 3, wherein the apparatus includes a plurality of second rollers 31 each associated with two, three or more first rollers 28. More particularly, the first rollers 28 of triangle cross section are arranged in such a way that central shafts 29 thereof lie in a single plane similar to that of Fig. 3. Two or three tapes 32 wound together from one ends thereof on the corresponding second roller 31 are wound from the other ends thereof on the corresponding first rollers 28, respectively.

Fig. 3B shows a second version of the apparatus of Fig. 3, wherein each tape 34 is wound on a pair of first rollers 33 each having an equilateral triangular cross section as shown in Fig. 3B and a plurality of pairs of the first rollers 33 is arranged side by side in a single plane. In this case, all of the tapes can be simultaneously shifted by rotating the right side rollers of the pairs in a clockwise direction or by rotating the left side rollers of the pairs in an anticlockwise direction.

Figs. 5 and 6 show embodiments of the annular-type tape driving apparatus according to the present invention.

The tape driving apparatus 40 of Fig. 5 comprises a single second roller 22 having a central shaft 25, a plurality of first rollers 21 each having the same dimension and an equilateral triangular cross section, and a plurality of tapes 23 each of which is wound from its one end on the corresponding first roller 21 and which are wound together from the other ends thereof on the second roller 22. The first rollers 21 extend parallel to each other and to the second roller. Further, central shafts 24 of the first rollers 21 are positioned on a circle *C1* coaxial with the shaft 25 of the second roller 22 at equidistant circumferential intervals. As shown in Fig. 5, in a rest position, an outermost surface of each first roller 21 is positioned perpendicular to the radial direction. In this embodiment, by rotating all of the first rollers simultaneously in a clockwise direction by 120°, the tapes 23 are wound on the corresponding first rollers by an amount equal to the width of the first roller. Similarly, by rotating the central second shaft 25 in an anticlockwise direction by an angle corresponding to 120° rotation of the first roller, the tapes are unwound from the corresponding first rollers. Roller driving means, and means for turning the first rollers to position a desired first roller in a predetermined station can be substantially the same as those described in the above Japanese Patent Application No. 136538/82.

The tape driving apparatus 50 shown in Fig. 6 is substantially the same as the apparatus shown in Fig. 5, except that each of the first rollers 26 has a square cross section. Of course, in this case, central shafts 27 of the first rollers are arranged along a circle *C2* coaxial with the shaft 25 of the second roller. In this embodiment, the "page" can be changed from one to the next one by rotating the first rollers by 90°. Roller driving means, and means for turning the first rollers to position a desired first roller in a predetermined station may be the same as those of Fig. 5. It should be noted that the cross section of the first roller is not limited to the triangle or square and can be a "polygon" such as a regular pentagon, a regular hexagon or the like.

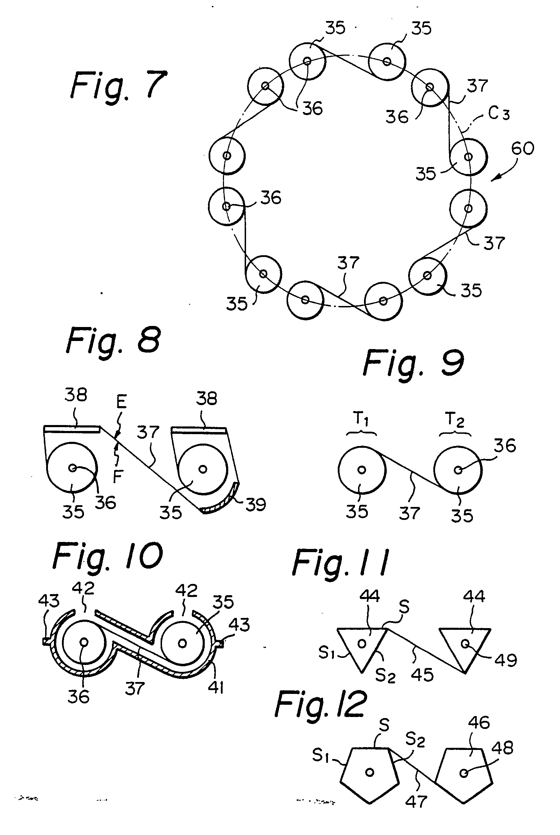

Figs. 7 — 15 show another aspect of the present invention wherein the tapes are more effectively used. Particularly, Fig. 7 shows a flat-type tape driving apparatus 60 comprising a plurality of pairs of rollers 35. As shown, central shafts 36 of these rollers 35 are positioned in a circle *C3* and each pair of rollers is arranged adjacent to each other. Each tape 37 is associated with one pair of rollers 35 and is wound on one of the paired rollers from its one end with a face *D* thereof inside and on the other roller from the other end thereof with the other face E thereof inside. Although not shown in the drawing, such pairs of rollers with the corresponding tapes can be arranged side by side to constitute the flat-type tape driving apparatus.

Explaining in more detail, in practice, as shown in Fig. 8, each pair of rollers 35 cooperate with corresponding guide plates 38 and a guide member 39, the corresponding tape 37 extending from one of the paired rollers to pass on the guide plate 38 and on the guide member 39 and then on the other guide plate 38 up to the other roller. When the plurality of pairs of rollers 35 are assembled to form the annular-type tape driving apparatus 60 as shown in Fig. 7, the guide plates 38 face or direct radially outwardly of the assembly. Similarly, when the plurality of pairs of rollers 35 are assembled to form the flat-type tape driving apparatus (not shown), the guide plates 38 are arranged above the corresponding rollers 36 in a single plane. The guide plates 38 and the guide member 39 may be omitted as shown in Fig. 9. In this case, the tape portions *T1* and *T2* positioned on the upper portions of the rollers 35 are used for the inputting operation. Preferably, the pair of rollers 35 with the corresponding tape 37 are assembled as a cassette as shown in Fig. 10. The cassette includes a casing 41 for containing the paired rollers 35 and the associated tape 37. The casing 41 has longitudinal slits 42 to expose the upper portions of the paired rollers 35 for permitting the inputting operation regarding the upper tape portions in the casing 41. The casing 41 has ridges or keys 43 at its both sides. These keys are adapted to engage with corresponding keyways (not shown) of a frame of the apparatus so that the cassette can be assembled as the flat-type or annular-type tape driving apparatus.

Of course, each of the paired rollers may have a polygonal cross section. For example, in a embodiment shown in Fig. 11, the cross section of each of the paired rollers 44 having central shafts 49 is an equilateral triangle. Also in this case, a tape 45 is wound on one of the paired rollers 44 from its one end with one face thereof inside and on the other roller from the other end thereof with the other face thereof inside. Similarly, the cross section of each of the paired rollers 46 having central shafts 48 may be a regular pentagon as shown in Fig. 12. Also in this case, a tape 47 is wound on one of the rollers 46 from its one end with one face thereof inside and on the other roller 46 from the other end thereof with the opposite face thereof inside. In the embodiment shown in Fig. 11, when the rollers 44 are rotated clockwise or anticlockwise by 120°, the tape 45 is shifted by a distance equal to the width of the roller and the side surfaces of the rollers are changed from $S$ to $S1$ or $S2$. Similarly, in the embodiment shown in Fig. 12, when the rollers 46 are rotated clockwise or anticlockwise by 72°, the tape 47 is shifted by a distance equal to the width of the side surface of the roller and the side surfaces of the rollers are changed from $S$ to $S1$ or $S2$.

The operation of the tape driving apparatus applied to an input machine 59 will now be explained with reference to Figs. 13 — 15. An example of Figs. 13 and 14 is the flat-type tape driving apparatus wherein four pairs of the pentagonal rollers 46 (each pair is the same as that of Fig. 12) are used. More particularly, as shown in Fig. 13, four pairs of the rollers 46 extend parallel to each other and are arranged side by side in such a way that all of the central shafts 48 of the rollers lie in a single plane. Of course, in each pair, the tape 47 is wound on one of the rollers from its one end with one face thereof inside and on the other roller from the other end thereof with the other face thereof inside. Fig. 14 shows an example of means for driving rollers. Said roller driving means comprises gears 51 and 52 fixed to the shafts 48 of the paired rollers 46, an endless toothed belt 53 engaged with all of the gears 51 and 52, and a stepping motor 54 connected to one of the gears 52 by a motor shaft 55. Between each shaft 48 of the roller 46 and the gear 51 or 52 a suitable clutch (not shown) is provided. If it is desired to shift all of the tapes 47 to the right (Fig. 14), the gears 51 are caused to be freely rotatable conditions by releasing the corresponding clutches and the gears 52 are positively rotated anticlockwise by the stepping motor 54 through the motor shaft 55 and the belt 53. On the other hand, if it is desired to shift all of the tapes to the left, the gears 52 are caused to be freely rotatable conditions and the gears 51 are positively rotated anticlockwise by the stepping motor 54 through the motor shaft 55, the idle gear 52 connected to the shaft 55 and the endless belt 53, thereby rotating the left side rollers of the paired rollers. By rotating the rollers 46 by 72°, the items displayed on the machine are changed to the next items (i.e., one page is changed). Inputting operation can be effected by designating one of the displayed items by finger-touch or pen-touch, as described in the above Japanese Patent Application No. 124877/82.

Fig. 15 shows another example of the roller driving means which can positively rotate all of the paired rollers. In this example, the roller driving means comprises a double-toothed endless belt 57. An upper run of the belt 57 are engaged by the gears 51 and 52 of the paired rollers (similar to those of Fig. 14) at staggered or zigzag fashion as shown in Fig. 15. A lower run of the belt 57 does not engage by the gears 51 and 52 and extends to a driving gear 56 fixed to a stepping motor (not shown). Guide gears 58 are provided for guiding the lower run of the belt. In this example, there are no clutches. When the belt 57 is moved in a clockwise direction by rotating the driving gear 56 clockwise, all of the tapes are simultaneously shifted to the right, and when the belt 57 is moved in an anticlockwise direction by rotating the driving gear anticlockwise, all of the tapes are simultaneously shifted to the left. Also in this case, by rotating the pentagonal rollers by 72°, the items displayed on the machine are changed to the next items.

As mentioned above, the tape driving apparatus according to the present invention can operate effectively even without the guide plates. Further, in the tape driving apparatus according to the present invention (Figs. 7 — 15), since both faces $D$ and $E$ of the tape can be used for inputting operation and for recording information thereon, usefulness of the tape is twice in comparison with that of the conventional one.

The tape driving apparatus of the present invention can be applied to various uses. For example, when magnetic tapes are used and one or more magnetic heads are provided adjacent to the tape holding rollers, the tape driving apparatus can be utilized as magnetic recording system such as tape-recorders. Of course, when a plurality of items is recorded on the tapes and a conventional input unit including a control portion and address memory is used, the tape driving apparatus can be utilized as multi-purpose codeless input equipment for computer addressers and telephone exchangers. It should be noted that the tape driving apparatus of the present invention can be utilized for other applications such as integrated information systems, data retrieval systems, data processing systems or the like.

## Claims

1. A tape drivirg apparatus comprising at least one first roller (11), at least one second roller (12), at least one tape (14) wound from its one end on the first roller and from the other end thereof on the second roller, and means for selectively driving the first roller or the second roller, characterized in that said first roller (11) has a polygonal cross section for determining an area of tape to be written on or read from.

2. A tape driving apparatus according to claim 1, characterized in that said tape is wound on the first roller from its one end with one face thereof inside and is wound on the second roller from the other end thereof with the other face thereof inside, whereby to allow information to be recorded on both side of the tape.

3. A tape driving apparatus according to claim 1 or claim 2, characterized in that said second roller (12) has also a polygonal cross section.

4. A tape driving apparatus according to any preceding claim, characterized in that a plurality of said first rollers (11) and the tapes (14) are provided, each said tape being wound from one end thereof on the corresponding first roller and all the tapes being wound together from their other end onto said second roller.

5. A tape driving apparatus according to any preceding claim, characterized in that pairs of said first and second rollers (46) including the corresponding tapes (47) each wound on the corresponding first roller from one end thereof with one face thereof inside and wound on the corresponding second roller from the other end thereof with the other face thereof inside are arranged side by side in a single plane.

## Patentansprüche

1. Gerät zum Antrieb von Bändern, umfassend mindestens eine erste Rolle (11), mindestens eine zweite Rolle (12), mindestens ein Band (14), das mit seinem einen Ende auf die erste Rolle und mit seinem anderen Ende auf die zweite Rolle aufgewickelt ist, und eine Einrichtung zum selektiven Antreiben der ersten Rolle oder der zweiten Rolle, dadurch gekennzeichnet, daß die erste Rolle (11) einen mehreckigen Querschnitt zum Bestimmen eines Bereichs oder einer Fläche des Bands, auf dem bzw. der eingeschrieben oder aus dem bzw. der ausgelesen werden kann, aufweist.

2. Gerät zum Antrieb von Bändern nach Anspruch 1, dadurch gekennzeichnet, daß das Band mit seinem einen Ende, mit seiner einen Fläche innen liegend, auf die erste Rolle und mit seinem anderen Ende, mit seiner anderen Fläche innen liegend, auf die zweite Rolle aufgewickelt ist, so daß Information auf beiden Seiten des Bands aufzeichenbar ist.

3. Gerät zum Antrieb von Bändern nach Anspruch 1 oder 2, dadurch gekennzeichnet, daß die zweite Rolle (12) ebenfalls einen mehreckigen Querschnitt aufweist.

4. Gerät zum Antrieb von Bändern nach einem der vorangehenden Ansprüche, dadurch gekennzeichnet, daß (jeweils) mehrere der ersten Rollen (11) und der Bänder (14) vorgesehen sind, jedes Band mit seinem einen Ende auf die betreffende erste Rolle aufgewickelt ist und alle Bänder an ihren anderen Enden zusammen bzw. gemeinsam auf die zweite Rolle aufgewickelt sind.

5. Gerät zum Antrieb von Bändern nach einem der vorangehenden Ansprüche, dadurch gekennzeichnet, daß Paare der ersten und zweiten Rollen (46) mit den betreffenden Bändern (47), die jeweils mit dem einen Ende, mit der einen Fläche nach innen weisend bzw. innen liegend, auf die betreffende erste Rolle und mit dem anderen Ende, mit der anderen Fläche innen liegend, auf die jeweilige zweite Rolle aufgewickelt sind, in einer einzigen (gemeinsamen) Ebene nebeneinander angeordnet sind.

## Revendications

1. Dispositif d'entraînement de bandes, comportant au moins un premier galet (11), au moins un second galet (12), au moins une bande (14) enroulée à partir de l'une de ses extrémités sur le premier galet et à partir de son autre extrémité sur le second galet, et des moyens pour entraîner de façon sélective le premier galet ou le second galet, caractérisé en ce que ledit premier galet (11) possède une section transversale polygonale servant à déterminer une zone de la bande, sur laquelle un enregistrement ou une lecture peut être exécuté.

2. Dispositif d'entraînement de bandes selon la revendication 1, caractérisé en ce que ladite bande est enroulée sur le premier galet à partir d'une de ses extrémités, l'une de ses faces étant tournée vers l'intérieur, et est enroulée sur le second galet à partir de son autre extrémité, son autre face étant tournée vers l'intérieur, ce qui permet l'enregistrement d'une information sur les deux faces de la bande.

3. Dispositif d'entraînement de bandes selon la revendication 1 ou 2, caractérisé en ce que ledit second galet (12) possède également une section transversale polygonale.

4. Dispositif d'entraînement de bandes selon l'une quelconque des revendications précédentes, caractérisé en ce qu'il est prévu une pluralité desdits premiers galets (11) et une pluralité des bandes (14), chacune desdites bandes étant enroulées depuis l'une de ses extrémités sur le premier galet correspondant et l'ensemble des bandes étant enroulées conjointement, à partir de leur autre extrémité, sur ledit second galet.

5. Dispositif d'entraînement de bandes selon l'une quelconque des revendications précédentes, caractérisé en ce que des couples desdits premier et second galets (46), y compris les bandes correspondantes (47), dont chacune est enroulée, à partir de l'une de ses extrémités, sur le premier galet correspondant, avec une face tournee vers l'intérieur, et est enroulée, à partir de son autre extrémité, sur le second galet correspondant, son autre face étant tournée vers l'intérieur, sont disposés côte à côte dans un même plan.

# Fig. 1

# Fig. 2A

# Fig. 2B

# Fig. 3

2

## Fig. 3A

28 28 28

29 29 29

32 31 32 31

## Fig. 3B

34 34

33 33

## Fig. 4

30

16 S 16 S₁ S S₂ 16 P'

P

15 17 15 17 12 18

## Fig. 5

40

21 C₁

21 24

23

25

23 22

24 21

## Fig. 6

50

26 C₂

26

23 27

23

22 25

3

EP 0 155 085 B1

Fig. 7

Fig. 8

Fig. 9

Fig. 10

Fig. 11

Fig. 12

4

*Fig. 13*

*Fig. 14*

*Fig. 15*

5